Europäisches Patentamt

European Patent Office

Office européen des brevets

(19)

(11) Veröffentlichungsnummer: **0 012 963**
**B1**

# EUROPÄISCHE PATENTSCHRIFT

(12)

(45) Veröffentlichungstag der Patentschrift:
**25.11.81**

(21) Anmeldenummer: **79105199.8**

(22) Anmeldetag: **17.12.79**

(51) Int. Cl.³: **C 09 D 5/40**, C 25 D 13/06,
C 08 G 18/58, C 08 G 18/81

(54) **Verfahren zur Herstellung von selbstvernetzenden Bindemitteln für kathodisch abscheidbare Elektrotauchlacke.**

(30) Priorität: **27.12.78 AT 9280/78**

(43) Veröffentlichungstag der Anmeldung:
**09.07.80 Patentblatt 80/14**

(45) Bekanntmachung des Hinweises auf die Patenterteilung:
**25.11.81 Patentblatt 81/47**

(84) Benannte Vertragsstaaten:
**BE CH DE FR GB IT NL SE**

(56) Entgegenhaltungen:
**FR-A-2 359 189**
**FR-A-2 359 190**
**FR-A-2 370 085**
**US-A-4 036 800**

(73) Patentinhaber: **Vianova Kunstharz Aktiengesellschaft,
A-8402 Werndorf (AT)**

(72) Erfinder: **Pampouchidis, Georg, Dr., Obere
Teichstrasse 31, A-8010 Graz (AT)**
Erfinder: **Hönig, Helmut, Dr., Seebachergasse 10,
A-8010 Graz (AT)**

(74) Vertreter: **Blum, Rudolf Emil Ernst et al, c/o E. BLUM &
CO. Vorderberg 11, CH-8044 Zürich (CH)**

# 0 012 963

## Verfahren zur Herstellung von selbstvernetzenden Bindemitteln für kathodisch abscheidbare Elektrotauchlacke

Gegenstand der vorliegenden Erfindung ist die Herstellung von Bindemitteln, welche nach der Neutralisation mit Säuren mit Wasser verdünnbar, an der Kathode elektrisch abscheidbar und durch thermische Polymerisation ohne zusätzliche Härtungskomponenten vernetzbar sind.

Aus den DE-A-2 707 405, 2 707 482, 2 755 538, 2 756 808 sowie den AT-C-343 769 und 346 989 sind durch thermische Polymerisation vernetzbare Bindemittel für kathodisch abscheidbare Elektrotauchlacke bekannt, bei welchen die entsprechenden basischen und/oder polymerisierbaren Funktionen mittels basischen und/oder polymerisierbaren Monoisocyanatvorprodukten in entsprechende Polymerisations-, Polykondensations- oder Polyadditionsharze eingeführt werden.

Die mit den dort beschriebenen Produkten erhaltenen Lackierungen erfüllen im wesentlichen alle Anforderungen, welche von der Praxis an diese Bindemittelgruppe gestellt werden. Von der Seite der Produktionstechnik und der Verarbeitbarkeit her gesehen, weisen sie jedoch noch Mängel auf.

So erfordert die Herstellung der Produkte in vielen Fällen eine exakte Abstimmung der Zeitabläufe bei der Herstellung der meist nur beschränkt lagerfähigen Zwischenprodukte, den Einsatz mehrerer Produktionseinheiten sowie relativ lange Produktionszeiten.

Bei der Verarbeitung der Produkte stellt die nicht optimale Dispergierbarkeit einen nicht ohne weiteres überwindbaren Nachteil dar, der sich besonders beim Verdünnen des Materials auf Badkonzentration auswirkt.

Es wurde nun gefunden, daß die Mängel der derzeit verwendeten Produkte durch den Einsatz eines gemischten, basische und polymerisierbare Funktionen aufweisenden Monoisocyanatvorproduktes überwunden werden können. Es war überraschend und nicht vorherzusehen, daß die Herstellung eines solchen gemischten Vorproduktes (bei Einhaltung bestimmter Voraussetzungen) nach einem »Ein-Topf-Verfahren« überhaupt möglich ist.

Die vorliegende Erfindung betrifft daher ein Verfahren zur Herstellung von selbstvernetzenden Bindemitteln für kathodisch abscheidbare Elektrotauchlacke durch Umsetzung von Hydroxylgruppen aufweisenden, gegebenenfalls mit Mono- und/oder Dicarbonsäuren modifizierten Epoxidharz-Amin-Addukten mit ungesättigten und basischen Monoisocyanaten in Gegenwart isocyanatinerter Lösungsmittel, welches dadurch gekennzeichnet ist, daß man (A) ein Mol eines Isocyanats mit der allgemeinen Formel $OCN-R-(NCO)_n$, wobei R einen aromatischen, aliphatischen oder cycloaliphatischen Kohlenwasserstoffrest darstellt, und n 1 oder 2 ist bei 0 bis 50° C, vorzugsweise bei $20-30°$ C

a) bei n=1 mit 0,1 bis 0,5 oder bei n=2 mit 0,1 bis 1,0 Mol eines tertiären Dialkylalkanolamines und anschließend

b) bei n=1 mit 0,5 bis 0,9 oder bei n=2 mit 1,0 bis 1,9 Mol einer Verbindung mit einer freien Hydroxylgruppe und 1 bis 3 $CH_2=CR_1$-Gruppen, wobei $R_1 = H$ oder $CH_3$ ist,

umsetzt und (B) dieses so erhaltene, im Durchschnitt eine freie Isocyanatgruppe aufweisende Vorprodukt mit den Hydroxylgruppen des Epoxidharz-Amin-Adduktes bei 10 bis 100° C, vorzugsweise 40 bis 80° C bis zu einem Isocyanatwert von 0 reagiert, wobei die Mengenverhältnisse zwischen den Komponenten so gewählt werden, daß das Endprodukt pro 1000 Molekulargewichtseinheiten mindestens 0,5, vorzugsweise 0,5 bis 2,5 end- oder seitenständige Doppelbindungen und mindestens 0,15, vorzugsweise 0,5 bis 2,5 basische Stickstoffatome aufweist.

Die gemäß der vorliegenden Erfindung hergestellten Produkte zeigen neben den genannten Vorteilen überraschenderweise im üblichen pH-Bereich gegenüber den derzeit eingesetzten Produkten eine wesentlich bessere Wasserlöslichkeit, wobei auch der sonst beim Verdünnen wasserlöslicher Harze auftretende »Viskositätsberg« nur in stark abgeschwächter Form auftritt.

Schließlich war es überraschend, daß die erfindungsgemäß hergestellten Bindemittel nach Neutralisation mit Säuren und Verdünnen mit Wasser in dem für die Verarbeitung günstigen pH-Bereich zwischen 5,0 und 7,0 im gesamten technisch interessanten Konzentrationsbereich zwischen 70 und 10% langzeitig stabile Lösungen liefern. Durch dieses verfahrenstechnisch günstige Verhalten erlauben diese Produkte eine problemlose Befüllung der verschiedenen Elektrotauchanlagen, als auch die einwandfreie Zugabe des Nachfüllmaterials.

Für die Herstellung von brauchbaren Isocyanatvorprodukten ist es wesentlich, daß neben den Mengenverhältnissen auch die Reaktionsfolge eingehalten wird. Sowohl bei der gleichzeitigen Zugabe der Komponenten (a) und (b), als auch bei der umgekehrten Zugabefolge — (b) vor (a) — entstehen hochviskose Vorprodukte, welche bei der Umsetzung mit dem Basisharz zu nur schwer verarbeitbaren oder gelierten Produkten führen.

Als Isocyanate der allgemeinen Formel $OCN-R-(NCO)_n$, wobei R ein aromatischer, aliphatischer oder cycloaliphatischer Rest und n 1 oder 2 ist, können beispielsweise aromatische Isocyanate wie 2,4- bzw. 2,6-Toluylendiisocyanat bzw. dessen Di- oder Trimerisierungsprodukte, 4,4'-Diphenylmethandiisocyanat, 4,4',4''-Triphenylmethantriisocyanat, Trimethylolpropan-tris-toluylenisocyanat, Tris-(4-isocyanatophenyl)-thiophosphat, oder cycloaliphatische Isocyanate wie Isophorondiisocyanat, Cyclohe-

2

xan-1,4-Diisocyanat, Dimeryldiisocyanat sowie aliphatische Isocyanate wie Trimethylhexamethylen-1,6-Diisocyanat, Tris-hexamethylentriisocyanat eingesetzt werden.

Als tertiäre Dialkylalkanolamine [Komponente (a)] werden vorzugsweise Dimethyläthanolamin, Diäthyläthanolamin, Dimethylpropanolamin, Diäthylpropanolamin sowie deren Homologe bzw. Isomere verwendet.

Als Komponenten (b), d. h. als Verbindungen mit einer freien Hydroxylgruppe und 1 bis 3 $CH_2=CR_1$-Gruppen, wobei $R_1$ ein Wasserstoffatom oder eine Methylgruppe darstellt, kommen insbesonders die Hydroxyalkylester der Acrylsäure oder Methacrylsäure wie z. B. Hydroxyäthyl (meth)acrylat, Hydroxypropyl(meth)acrylat sowie deren höhere Homologe bzw. Isomere oder Tri-, Tetra-propylenglykolmono(meth)acrylat, Trimethylolpropan-di(meth)acrylat, Pentaerythrit-tri(meth) acrylat, Trimethylolpropan-diallyläther, Pentaerythrit-triallyläther in Betracht.

Die Herstellung des Isocyanatvorproduktes erfolgt in der Weise, daß man in einer ersten Stufe das Amin mit dem Isocyanat bei 0 bis 50°C, vorzugsweise bei 20 bis 30°C, vollständig reagiert und anschließend die ungesättigte Komponente (b) zur Reaktion bringt. Da beide Reaktionen mit starker Exothermie ablaufen, ist eine langsame Zugabe der Komponenten (a) und (b) zum Isocyanat von Vorteil.

Die Mengenverhältnisse zwischen dem Isocyanat und den Komponenten (a) und (b) werden so gewählt, daß das Vorprodukt im Durchschnitt eine freie Isocyanatgruppe aufweist. Bei Verwendung eines Diisocyanats als Ausgangsmaterial ($n=1$) werden pro Mol Isocyanat 0,1 bis 0,5 Mol, bei Verwendung eines Triisocyanats ($n=2$) 0,1 bis 1,0 Mol des Dialkylalkanolamins eingesetzt. Die Menge der ungesättigten Verbindung bewegt sich dementsprechend bei $n=1$ zwischen 0,5 und 0,9 Mol, bei $n=2$ zwischen 1,0 und 1,9 Mol.

Die in der Stufe (B) eingesetzten basische Gruppierungen aufweisenden Epoxidharze werden durch Umsetzung der Oxirangruppierungen von Di- oder Polyepoxidverbindungen mit sekundären Aminen bei 60 bis 160°C erhalten. Gegebenenfalls können die Oxirangruppen vor der Umsetzung mit dem Amin partiell mit Monocarbonsäuren reagiert werden. Eine weitere Methode zur Modifizierung der Epoxidharze besteht darin, daß man 2 Mol einer Diepoxidverbindung mit 1 Mol einer aliphatischen Dicarbonsäure und 2 Mol eines sekundären Amins gleichzeitig oder in getrennten Reaktionen bei 100 bis 160°C umsetzt.

Geeignete Epoxidverbindungen sind die Glycidyläther von Phenolen oder Phenol-Novolaken, Glycidylester von aliphatischen, aromatischen oder cycloaliphatischen Polycarbonsäuren, Glycidyläther von aliphatischen oder cycloaliphatischen Diolen bzw. Polyolen. Eine ausführliche Beschreibung dieser Stoffe findet sich bei A. M. Paquin, Epoxidverbindungen und Epoxidharze, Verlag Springer, 1958.

Die bevorzugten Diepoxidverbindungen sind die Diglycidyläther von Phenolen, insbesondere Umsetzungsprodukte von 4,4'-Bis(-hydroxyphenol)-propan (Bisphenol A) bzw. dessen hydrierte oder alkyl- oder halogensubstituierte Derivate mit Epichlorhydrin.

Als sekundäre Amine für die Herstellung der Epoxidharz-Amin-Addukte werden beispielsweise Dialkylamine, wie Dimethylamin, Diäthylamin sowie deren Homologe und Isomere, sowie cyclische Amine wie Äthylenimin, Morpholin u. a. eingesetzt.

Bevorzugt werden Dialkanolamine wie Diäthanolamin, Dipropanolamine, Dibutanolamine und deren Homologe verwendet.

Die zur Modifikation herangezogenen Monocarbonsäuren sind insbesondere die langkettigen Ölfettsäuren sowie deren chemische Umwandlungsprodukte. Die einsetzbaren Dicarbonsäuren können gesättigt oder ungesättigt sein, wie z. B. Fumarsäure, Malonsäure, Bernsteinsäure, Glutarsäure, Adipinsäure, Pimelinsäure, Korksäure, Azelainsäure, Sebacinsäure, Tetradecandicarbonsäure oder dimere Fettsäuren.

Die Reaktionsstufe (B), nämlich die Umsetzung des Epoxidharz-Amin-Adduktes mit dem Isocyanatvorprodukt, erfolgt bei 10 bis 100°C, vorzugsweise bei 40 bis 80°C, gegebenenfalls in Gegenwart isocyanatinerter Lösungsmittel, bis ein Isocyanatwert von praktisch 0 erreicht ist. Das Mengenverhältnis zwischen den Komponenten wird so gewählt, daß im Endprodukt pro 1000 Molekulargewichtseinheiten mindestens 0,5, vorzugsweise 0,5−2,5 basische Stickstoffatome und mindestens 0,5 vorzugsweise 0,5−2,5 polymerisierbare Doppelbindungen enthalten sind.

Die basischen Gruppierungen der kationischen Komponente werden mit organischen und/oder anorganischen Säuren, z. B. Ameisensäure, Essigsäure, Milchsäure, Phosphorsäure u. dgl. neutralisiert. Der Neutralisationsgrad hängt im Einzelfall von den Eigenschaften des verwendeten Bindemittels ab. Im allgemeinen wird so viel Säure zugegeben, daß das Überzugsmittel einen pH-Wert von 4 bis 9, vorzugsweise 5 bis 8, aufweist und mit Wasser einwandfrei verdünnt oder dispergiert werden kann. Die Konzentration des Bindemittels in Wasser hängt von den Verfahrensparametern bei der Verarbeitung im Elektrotauchverfahren ab und liegt im Bereich von 2 bis 30 Gew.-%, vorzugsweise bei 5 bis 15 Gew.-%. Nach der Abscheidung wird der Überzug bei Temperaturen von 130 bis 200°C, vorzugsweise 150 bis 170°C, gehärtet. Die Härtungszeit beträgt 5 bis 30 Minuten, üblicherweise 10 bis 25 Minuten.

Die folgenden Beispiele erläutern die Erfindung, ohne sie zu beschränken. Alle angegebenen Teile und Prozente sind, sofern nicht anders angegeben, Gewichtsteile bzw. Gewichtsprozente.

**0 012 963**

### Herstellung der Vorprodukte

### A) Hydroxylgruppen enthaltende Komponenten

In einem Reaktionsgefäß mit Rührer, Thermometer, Inertgaszufuhr und Rückflußkühler wird jeweils das Epoxidharz mit Lösungsmittel so verdünnt, daß das Endprodukt eine Konzentration von 70% aufweist, gegebenenfalls die Mono- oder Dicarbonsäure und das Diäthanolamin vorgelegt und die Mischung unter Rühren vorsichtig auf 60 bis 90°C erhitzt. Die Reaktion ist exotherm, wobei die Temperatur auf 120 bis 150°C ansteigt. Das Reaktionsprodukt wird 1 bis 3 Stunden eventuell unter gelegentlichem Kühlen bei 120 bis 150°C gerührt und dann auf ca. 50 bis 70°C gekühlt.

Tabelle 1

| Teilkomp. | Epoxidharz (Ep. Äqu.) | Lösungs-mittel | Diäthanol-amin | Mono- od. Dicarbon-säuren | Reaktions-bedingun-gen |
|---|---|---|---|---|---|
| A 1 | 1100 (500−575) | Egac | 210 | − | 2 h/140°C |
| A 2 | 500 (230−250) | MIBK | 157,5 | 84 Isononansäure | 3 h/120°C |
| A 3 | 500 (230−250) | CHX | 157,5 | 140 Rizinenfettsrn. | 2 h/140°C |
| A 4 | 700*) (190−200) | Egac | 262 | 280 Rizinenfettsrn. | 2 h/130°C |
| A 5 | 800 (190−200) | Egac | 210 | 146 Adipinsäure | 2 h/130°C |
| A 6 | 500 (230−250) | CHX | 315 | 73 Adipinsäure | 2 h/130°C |
| A 7 | 1100 (500−575) | Egac | 210 | 318 TDDS | 2 h/140°C |

Erläuterungen der Abkürzungen (Tabelle 1)
Egac  = Äthylglykolacetat
MIBK = Methylisobutylketon
CHX  = Cyclohexanon
TDDS = Tetradecandicarbonsäure
*)      = Epoxidharz auf Novolak-Basis (Epoxid-Funktionalität = 3,5)

### B) Gemischte Monoisocyanatvorprodukte

In einem Reaktionsgefäß mit Rührer, Thermometer, Zugabetrichter und Rückflußkühler wird 1 Mol des jeweiligen Polyisocyanates vorgelegt, mit Äthylglykolacetat so verdünnt, daß das Endprodukt eine Konzentration von 60% aufweist und unter Feuchtigkeitsausschluß und Rühren auf 10 − 20°C gekühlt. Danach wird unter Kühlung und Rühren während einer halben Stunde das tertiäre Dialkylalkanolamin (die Reaktion ist exotherm und die Temperatur steigt auf 20 bis 35°C) und anschließend in einer weiteren halben Stunde die polymerisierbare Hydroxylgruppen enthaltende Verbindung, stabilisiert mit 0,1% Hydrochinon, zugegeben. Das Reaktionsprodukt kann unmittelbar danach eingesetzt werden.

4

Tabelle 2

| Teilkomp. | 1 Mol Polyiso-cyanat | Mol Amino-verbindung | Mol Hydroxy-verbindung | Molge-wicht ca. |
|-----------|----------------------|----------------------|------------------------|-----------------|
| B 1 | TDI | 0,4 DMEA | 0,6 HEA | 279 |
| B 2 | TDI | 0,5 DEEA | 0,5 TMPDA | 373 |
| B 3 | IPDI | 0,3 DMEA | 0,7 HEM | 331 |
| B 4 | TPMT | 0,6 DEEA | 1,4 HEA | 600 |
| B 5 | TPMT | 1,0 DMEA | 1,0 TMPDA | 698 |

Erläuterungen der Abkürzungen (Tabelle 2)
TDI      = Toluylendiisocyanat (handelsübliches Isomerengemisch)
IPDI     = Isophorondiisocyanat
TPMT   = Triphenylmethantriisocyanat
DMEA = Dimethyläthanolamin
DEEA   = Diäthyläthanolamin
HEA     = Hydroxyäthylacrylat
HEM     = Hydroxyäthylmethacrylat
TMPDA = Trimethylolpropandiacrylat

Beispiele 1 – 14

Zur Hydroxylkomponente A wird, bei 50 – 70° C, das Monoisocyanatvorprodukt unter Rühren während 5 bis 15 Minuten zugegeben, wobei die Temperatur trotz der exothermen Reaktion 80° C nicht überschreiten darf. Nach 3 Stunden bei 70 – 75° C wird der Ansatz mit Äthylglykol auf 60% verdünnt und mit 0,1% Hydrochinon, berechnet auf das Gesamtprodukt, stabilisiert und abgefüllt.

In den nachfolgenden Beispielen sind wegen der besseren Übersicht die Mengen der Komponenten A und B jeweils als Festharz, d. h. ohne die verwendeten Lösungsmittel, angeführt:

Tabelle 3

| Beispiel Nr. | Teile der Komp. A | Teile der Komp. B | BNz*) | DBz**) |
|---|---|---|---|---|
| 1 | 1310 A 1 | 836 B 1 | 1,49 | 0,84 |
| 2 | 1310 A 1 | 1120 B 2 | 1,03 | 1,24 |
| 3 | 741 A 2 | 697 B 1 | 1,73 | 1,04 |
| 4 | 741 A 2 | 746 B 2 | 1,69 | 1,35 |
| 5 | 797 A 3 | 746 B 2 | 1,62 | 1,30 |
| 6 | 797 A 3 | 662 B 3 | 1,44 | 0,96 |
| 7 | 1242 A 4 | 995 B 3 | 1,52 | 0,94 |
| 8 | 1242 A 4 | 1048 B 5 | 1,75 | 1,31 |
| 9 | 1156 A 5 | 976 B 1 | 1,60 | 0,99 |
| 10 | 1156 A 5 | 1200 B 4 | 1,25 | 1,10 |
| 11 | 888 A 6 | 995 B 3 | 2,07 | 1,12 |
| 12 | 888 A 6 | 1048 B 5 | 2,33 | 1,55 |
| 13 | 1628 A 7 | 1449 B 2 | 1,30 | 1,30 |
| 14 | 1628 A 7 | 1322 B 3 | 1,08 | 0,95 |

*) BNz: Basenzahl, d. h. Anzahl der basischen N-Atome pro 1000 Molekulargewichtseinheiten.
**) DBz: Doppelbindungszahl, d. h. Anzahl der Doppelbindungen pro 1000 Molekulargewichtseinheiten.


### Prüfung der Bindemittel gemäß Beispielen 1—14

Aus den oben angeführten Bindemitteln wurden jeweils Proben von 100 g Festharz mit der entsprechenden Säure versetzt und unter Rühren mit deionisiertem Wasser auf 1000 g ergänzt. Die 10%igen Lösungen wurden kataphoretisch auf Stahlblech abgeschieden. Die Abscheidungszeit betrug in allen Fällen 60 Sekunden. Die überzogenen Substrate wurden anschließend mit deionisiertem Wasser gespült und bei erhöhter Temperatur gehärtet. Die resultierenden Filme zeigten eine Schichtstärke von 13 bis 17 µm.

In Tabelle 4 sind die Ergebnisse zusammengefaßt.

Tabelle 4

| Beisp. Nr. | Neutralisation | | | Beschichtung | | Prüfung | | |
|---|---|---|---|---|---|---|---|---|
| | Menge[1] | Art[2] | pH[3] | Volt | Härtung min/°C | Tiefung[4] | Beständigkeit [5] | [6] |
| 1 | 4,0 | E | 6,0 | 220 | 20/180 | 7,5 | 580 | 450 |
| 2 | 2,5 | A | 6,2 | 280 | 15/170 | 6,5 | 850 | 650 |
| 3 | 3,0 | A | 6,3 | 210 | 20/170 | 8,0 | 600 | 480 |
| 4 | 4,0 | E | 6,3 | 220 | 15/170 | 7,0 | 800 | 550 |
| 5 | 5,0 | M | 6,6 | 190 | 15/180 | 7,5 | 750 | 480 |
| 6 | 3,0 | A | 6,2 | 200 | 15/180 | 8,1 | 580 | 440 |
| 7 | 4,0 | E | 6,4 | 240 | 20/180 | 8,3 | 560 | 480 |
| 8 | 5,0 | M | 6,5 | 280 | 20/180 | 6,8 | 740 | 560 |
| 9 | 2,5 | A | 6,5 | 280 | 15/170 | 8,0 | 850 | 650 |
| 10 | 2,3 | A | 6,6 | 300 | 15/170 | 7,8 | 800 | 600 |
| 11 | 4,5 | E | 6,0 | 260 | 15/170 | 7,5 | 750 | 580 |
| 12 | 3,0 | A | 5,9 | 280 | 10/170 | 7,0 | 700 | 540 |
| 13 | 4,0 | E | 6,1 | 280 | 15/170 | 7,5 | 760 | 600 |
| 14 | 2,3 | A | 6,0 | 280 | 20/180 | 7,0 | 650 | 540 |

Erläuterungen zu Tabelle 4
[1] Menge Säure in g pro 100 g Festharz.
[2] E: Essigsäure, M: Milchsäure, A: Ameisensäure.
[3] gemessen in 10%iger wäßriger Lösung.
[4] Tiefung nach Erichsen DIN 53 156 (mm).
[5] Angabe der Stunden bis Rost- oder Blasenbildung bei Wasserlagerung/40°C sichtbar.
[6] Salzsprühtest ASTM B 117-64 : 2 mm Angriff am Kreuzschnitt nach der angegebenen Stundenzahl. Für diesen Test wurden gereinigte, nicht vorbehandelte Stahlbleche mit einem pigmentierten Lack beschichtet, welcher, bezogen auf 100 Gew.-Teile Harzfestkörper, 20 Gew.-Teile Aluminiumsilikat-pigment und 2 Gew.-Teile Ruß enthielt.

**Patentanspruch**

Verfahren zur Herstellung von selbstvernetzenden Bindemitteln für kathodisch abscheidbare Elektrotauchlacke durch Umsetzung von Hydroxylgruppen aufweisenden, gegebenenfalls mit Mono- und/oder Dicarbonsäuren modifizierten Epoxidharz-Amin-Addukten mit ungesättigten und basischen Monoisocyanaten in Gegenwart isocyanatinerter Lösungsmittel, dadurch gekennzeichnet, daß man (A) ein Mol eines Isocyanats mit der allgemeinen Formel $OCN-R-(NCO)_n$, wobei R einen aromatischen, aliphatischen oder cycloaliphatischen Kohlenwasserstoffrest darstellt und n 1 oder 2 ist, bei 0 bis 50°C, vorzugsweise bei $20-30°C$

a) bei n=1 mit 0,1 bis 0,5 oder bei n=2 mit 0,1 bis 1,0 Mol eines tertiären Dialkylalkanolamines und anschließend
b) bei n=1 mit 0,5 bis 0,9 oder bei n=2 mit 1,0 bis 1,9 Mol einer Verbindung mit einer freien Hydroxylgruppe und 1 bis 3 $CH_2=CR_1$-Gruppen, wobei $R_1 = H$ oder $CH_3$ ist,

umsetzt und (B) dieses so erhaltene, im Durchschnitt eine freie Isocyanatgruppe aufweisende Vorprodukt mit den Hydroxylgruppen des Epoxidharz-Amin-Adduktes bei 10 bis 100°C, vorzugsweise 40 bis 80°C, bis zu einem Isocyanatwert von 0 reagiert, wobei die Mengenverhältnisse zwischen den Komponenten so gewählt werden, daß das Endprodukt pro 1000 Molekulargewichtseinheiten mindestens 0,5, vorzugsweise 0,5 bis 2,5 end- oder seitenständige Doppelbindungen und mindestens 0,15, vorzugsweise 0,5 bis 2,5 basische Stickstoffatome aufweist.

## Claim

Process for preparing thermosetting binders for cathodically depositable electrodeposition paints by reaction of epoxy resine/amine adducts carrying hydroxyl groups and optionally modified with mono- and/or dicarboxylic acids, with unsaturated and basic monoisocyanates in the presence of isocyanate inert solvents, which is characterised in that (A) 1 mole of an isocyanate with the general formula $OCN-R-(NCO)_n$, in which R is an aromatic, aliphatic or cycloaliphatic hydrocarbon radical, and n is 1 or 2, is reacted at from $0-50°C$, preferably $20-30°C$,

a)   if $n=1$, with $0.1-0.5$ or, if $n=2$, with $0.1-1.0$ moles of a tertiary dialkylalkanol amine and subsequently

b)   if $n=1$, with $0.5-0.9$ or if $n=2$, with $1.0-1.9$ mole of a compound carrying one free hydroxy group and $1-3\ CH_2=CR_1$ groups, where $R_1=H$ or $CH_3$, and

(B) the obtained intermediate carrying an average of 1 free isocyanate group is reacted at from $10-100°C$, preferably at from $40-80°C$, with the hydroxy groups of the epoxy resin/amine adduct until an isocyanate value of 0 is obtained, the quantities between the components being chosen such that the final product, in 1000 molecular weight units, carries at least 0.5, preferably $0.5-2.5$ chain end or side chain double bonds and at least 0.15, preferably $0.5-2.5$ of basic nitrogen atoms.

## Revendication

Procédé de préparation de liants auto-réticulables pour vernis pour électrodéposition par immersion précipitable à la cathode, par réaction de produits d'addition résine époxyde-amine, comportant des groupes hydroxyle et éventuellement modifiés par des acides mono- et/ou dicarboxyliques, avec des monoisocyanates basiques et insaturés en présence de solvants inertes vis-à-vis des isocyanates, caractérisé en ce qu'il consiste (A) à faire réagir une mole d'un isocyanate de formule générale $OCN-R-(NCO)_n$ où R représente un résidu hydrocarboné aromatique, aliphatique ou cycloaliphatique et n est égal à 1 ou 2, entre 0 et 50°C, de préférence entre 20 et 30°C,

a)   avec 0,1 à 0,5 mole, quand $n=1$, ou avec 0,1 à 1,0 mole, quand $n=2$, d'une dialkylalkanolamine tertiaire, puis

b)   avec 0,5 à 0,9 mole, quand $n=1$, ou avec 1,0 à 1,9 mole, quand $n=2$, d'un composé ayant un groupe hydroxyle libre et de 1 à 3 groupes $CH_2=CR_1$- où $R_1$ représente H ou $CH_3$,

et (B) à faire réagir, entre 10 et 100°C et de préférence entre 40 et 80°C, l'intermédiaire ainsi obtenu comportant en moyenne un groupement isocyanate libre, avec les groupes hydroxyle du produit d'addition résine époxydeamine jusqu'à consommation complète de l'isocyanate, les proportions entre les composants étant choisies de manière telle, que le produit final présente au moins 0,5, de préférence 0,5 à 2,5, doubles liaisons terminales ou situées en chaîne et au moins 0,15, de préférence 0,5 à 2,5, atomes d'azote basiques, pour 1000 unités de poids moléculaire.